# EUROPÄISCHE PATENTSCHRIFT

(11) **EP 0 992 637 B1**
(45) Veröffentlichungstag und Bekanntmachung des Hinweises auf die Patenterteilung: **04.12.2002**
(21) Anmeldenummer: 98118520.0
(22) Anmeldetag: 30.09.1998
(51) Int. Cl.: E04C 2/52, F24D 3/14

(54) **Vorgefertigtes Bauelement**
Prefabricated building element
Element préfabriqué

(43) Veröffentlichungstag der Anmeldung: 12.04.2000
(73) Patentinhaber: Polygo Holding GmbH, 94559 Niederwinkling (DE)
(72) Erfinder: Steiner, Martin, 3370 Ybbs (AT)

(56) Entgegenhaltungen:
- DE-A- 3 834 472
- DE-C- 3 834 864

## Beschreibung

Die Erfindung bezieht sich auf ein vorgefertigtes Bauelement, wie Decken-, Wand-, oder dergl. -element, wenigstens aus einem beispielsweise aushärtbaren Werkstoff, wie z.B. Beton, mit darin integrierten von Heiz- oder Kühlmedium durchströmbaren Rohrregistern für die Klimatisierung von Räumen.

Vorgefertigte Wand- und Deckenplatten mit Flächenheizungen sind an sich z.B. aus der CH-A-6 00 259 bekannt. Sie finden immer mehr Anwendung, sowohl im gewerblichen, als auch im Wohnungsbau. Dabei werden, wie u.a. mit der DE-C2-39 08 108 vorgeschlagen, Flächenheizungen in das Element zwischen Decke oder Wand und einer verputzen Gipsplatte oder dergl. in einem Luftraum integriert, wobei der Luftraum die bei reibungsschlüssiger Verlegung der Rohrregister während des Heiz- bzw. Abkühlphase auftretenden durch unterschiedliche Wärmedehnung der verwendeten Materialien auftretenden Geräusche vermieden werden sollen.

Ein weitere Betonplatte mit einer im Inneren angeordneten Flächenheizung offenbart die DE-C2-38 34 472, bei der die Wärmespannungen dadurch vermieden werden sollen, indem in jedem Plattenfeld zwei Heizrohrregister vorgesehen sind, die geradlinig verlaufen und an gegenüberliegende Vor- und Rücklaufrohre angeschlossen sind.

Die DE-A1-41 31 797 beschreibt ein weiteres vorgefertigtes Flächenelement für die Raumklimatisierung in Sandwich-Bauweise, bei dem die Heizrohre in einer Wärmeleitenden Schicht zwischen zwei Platten eingebettet sind.

Aus der DE-A-29 36 986 ist auch ein vorgefertigtes plattenförmiges Deckenelement zu entnehmen, das in einer Gasbetonschicht eingebrachte Injektionskanäle zum Einziehen von Bewehrungseisen, Schutzrohren für Stromkabel und Bodenheizelementen.

Solche vorgefertigten Decken- und Wandplatten mit darin vorgesehenen Heizund Kühlrohrregister sind in der Herstellung aufwendig und teuer, weshalb nach wie vor der Einbau von Flächenheizungen vor Ort an der Stahlbetondecke vorgenommen wird, dadurch entstehen jedoch auch sehr hohe Kosten. Diese hohen Kosten werden insbesondere durch das zusätzlich erforderliche Aufbringen von Haftbrücken und eines zweilagigen Verputzes mit Bewehrungsgittern.

Der Erfindung, wie sie in den Ansprüchen beschrieben ist, liegt daher die Aufgabe zugrunde, ein vorgefertigtes Bauelement, wie z.B. eine Decken-, Wand oder dergl. -element zu schaffen in das eine Flächenheizung integriert ist, mit dem die Herstellung desselben rationalisiert und verbilligt wird und bei dem die Nachteile der bekannten Decken- und Wandelemente dieser Art vermieden sind.

Die mit der Erfindung erzielten Vorteile liegen insbesondere darin, daß die Rohrregister bereits bei der Bauelementherstellung in den Werkstoff so integriert, d.h. werden, indem sie in die Schalung eingelegt und anschließend eingegossen werden und daß die Rohre der Rohrregister bereits vor dem eingießen in einer oder mehreren Rohrklemmschienen die mit Distanzfüßen ausgerüstet sind, festgelegt sind, wodurch außerdem auch störende Geräuschentwicklungen vermieden werden. Ein weiterer Vorteil liegt in den geringen Kosten einer rationell durchführbaren Fertigung und der Einsparung von Abstandhaltem für die Betoniereisen.

Die Erfindung ist nachstehend anhand eines in den Abbildungen dargestellten Ausführungsbeispieles näher erläutert.

Es zeigt:

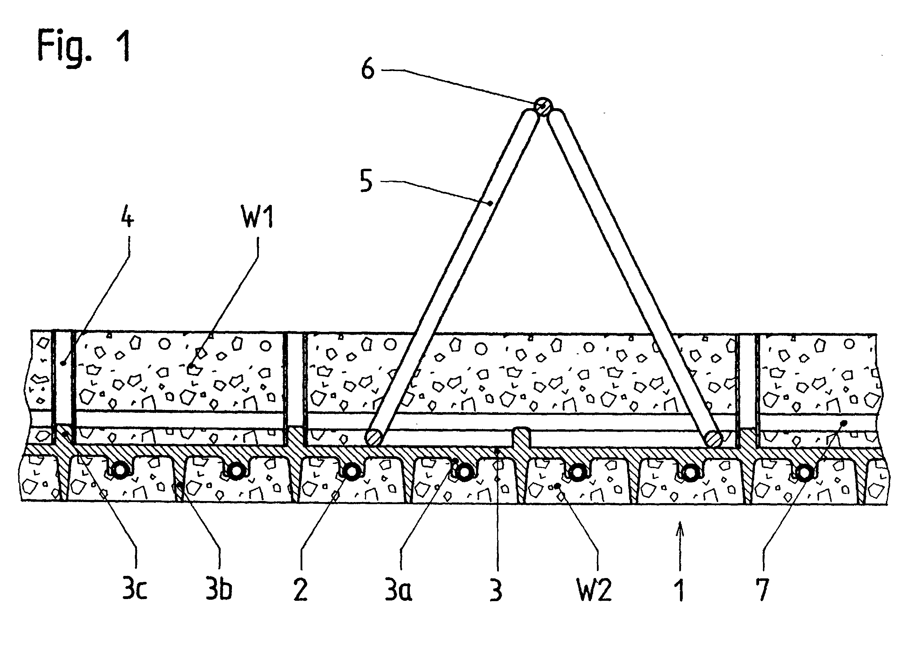

Fig. 1 einen Schnitt durch ein erfindungsgemäßes Bauelement und

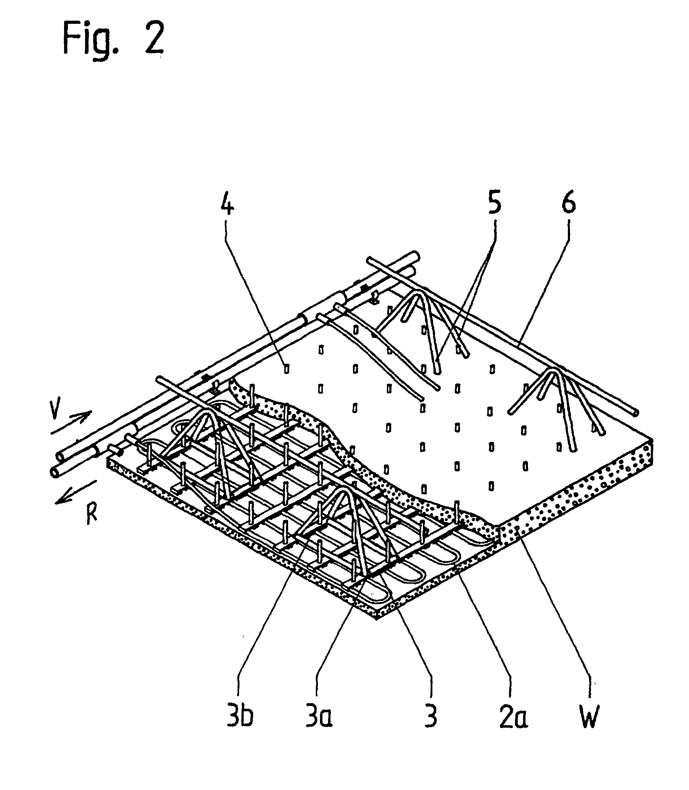

Fig. 2 eine perspektivische Darstellung der Fig. 1

In den Abbildungen ist ein vorgefertigtes Bauelement 1, z.B. ein Deckenelement, das beispielsweise aus Stahlbeton gefertigt ist, dargestellt, in das ein oder mehrere Rohrregister 2a integriert sind. Diese Rohregister 2a werden bei der Herstellung des Bauelementes bereits in die Schalung eingelegt und mit einbetoniert. Dazu sind die Rohre 2 der Rohrregister 2a in zwischen den in Richtung des zu klimatisierenden Raumes weisenden Distanzfüßen 3b angeordneten Rohrhalter 3a eines oder mehrerer Rohrklemmschienen 3 festgelegt. Die Rohrklemmschiene 3 besitzt oberhalb ihres Steges kurze Stutzen 3c, auf die z.B. zum Zwecke des Anbohrschutzes Positionsröhrchen 4 gesteckt werden können, um bei der Montage späterer auszuführender Gewerke, wie Elektromontage etc. die Rohre 2 nicht zu beschädigen. Dadurch wird zusätzlich auch ein Versatz der Rohrregister 2 bei Betoneinbringung vermieden.

Die Distanzfüße 3c der Rohrklemmschienen 3 sind vorzugsweise konisch derart ausgebildet, daß sie an ihrem Ende an der Raumdecke nur noch eine sehr geringe Oberfläche besitzen, damit sie an der Deckenoberfläche nicht mehr erkennbar sind. Durch diese Maßnahme wird auch ein zusätzliches Verputzen der Deckenoberfläche überflüssig. Die Rohrhalter 3a der Rohrklemmschiene 3 sind einzeln oder mehrfach zwischen den Distanzfüßen 3b angeordnet. Wegen der Anbringung der rohrhalter 3a an der Unterseite der Rohrklemmschiene 3 ist gewährleistet, daß beim Einbringen des Betons in die Schalung keinerlei Beschädigungen der Rohre 2 verursacht werden. Die Verbindungen der Rohrregister 2a zu den Vorlaufleitungen V und den Rücklaufleitungen R können mit Schutzrohren, die über die Enden der Rohre 2 bzw. deren Verbindungsleitungen gesteckt sind versehen sein.

Die Abstände der Rohrklemmschienen 3 untereinander sind so bemessen, daß ein Aufschwimmen und Herabdrücken der Rohre 2 bei der Einbringung des Betons in die Schalung vermieden wird und die erforderliche horizontale Rohrlagenebene eingehalten werden kann.

Die Rohrregister 2a bestehen aus Rohren 2 geringen Durchmessers, (maximal etwa 10 mm) bei einer Wanddicke von etwa 2 mm und sind dicht oberhalb der Decke vorgesehen, so daß eine äußerst rasche Regelung und Temperaturübertragung vom Heiz- bzw. Kühlmedium zum zu klimatisierenden Raum ermöglicht ist, während der Werkstoff W1 oberhalb der Rohrklemmschiene die Wärmeübertragung verzögert, ggfls. durch eine eingelegte Wärmedämmung über der Rohrklemmschiene 3, beispielsweise eine Dämmatte, überhaupt verhindert.

Mit 5,6,7 sind Bewehrungseisen des Bauelementes bezeichnet.

Die erforderliche Berücksichtigung der Statik- und Brandschutzanfordeungen ist durch die Distanzfüße gewährleistet, wodurch die Bewehrungen ca. 20 mm von der Deckenoberfläche gehalten werden. Versuche haben ergeben, daß eine statische Beeinträchtigung des Bauelementes 1 durch die integrierten Rohrregister 2 nicht eintritt, solange bei Deckenschichten von etwa 5 cm Rohrdurchmesser von ca. 8 mm nicht wesentlich überschritten werden.

Das Bauelement 1 kann beispielsweise oberhalb der Rohrklemmschiene 3 aus einer Werkstoffschicht W1 und unterhalb derselben aus einer Schicht W2 aus einem anderen Werkstoff gefertigt sein, um z.B. konstruktive und damit zusammenhängende Regel- und/oder Wärmeleitprobleme lösen zu können. Es ist auch möglich, die Distanzfüße 3c deutlich kürzer, z.B. nur 2 mm gegenüber 6 mm lang auszubilden und unterhalb der Rohrklemmschiene 3 einen gut wärmeleitender Werkstoff W2 einzubringen. Es kann auch unterhalb der Rohrklemmschiene 3 Luft vorgesehen und eine Abdeckung zur Raumseite hin aus Metall, Glas, Keramik oder dergl. angebracht sein.

## Patentansprüche

1. Vorgefertigtes Bauelement, wie Decken-, Wand- oder dergl. -element (1), aus wenigstens einem beispielsweise aushärtbaren Werkstoff (W), wie beispielsweise Beton, mit darin integrierten, von Heiz- oder Kühlmedium durchströmbaren Rohrregistern (2a) für die Klimatisierung von Räumen, **gekennzeichnet durch** mehrere von dem Werkstoff (W) umhüllte Rohrklemmschienen (3) zur Aufnahme der dünnwandigen Rohre (2) mit geringem Durchmesser der Rohrregister (2a), wobei die Rohrklemmschienen (3) auf ihrer zum zu klimatisierenden Raum hinzurichtenden Unterseite Rohrhalter (3a) für die Rohre (2) und zwischen mindestens zwei Rohrhaltern (3a) je einen Distanzfuß (3b) besitzen und auf ihrer Oberseite Stutzen (3c) für die Halterung von Positionierelementen (4) aufweisen, und die Schichtdicke des Werkstoffes (W) zum zu klimatisierenden Raum hin etwa der Länge der Distanzfüße (3b) entspricht, während die Schichtdicke des Werkstoffes (W) auf der Oberseite der Rohrklemmschiene (3) höher vorgesehen ist.

2. Vorgefertigtes Bauelement nach Anspruch 1, **dadurch gekennzeichnet, daß** die Distanzfüße (3b) der Rohrklemmschiene (3) in Richtung ihres freien Endes hin konisch verlaufen.

3. Vorgefertigtes Bauelement nach Anspruch 1 und 2, **dadurch gekennzeichnet, daß** die Rohre (2) max. 10 mm Durchmesser bei einer max. Wanddicke von 2,0 mm, vorzugsweise 1,2 mm, aufweisen.

4. Vorgefertigtes Bauelement nach Anspruch 1 bis 3, **dadurch gekennzeichnet, daß** die Distanzfüße (3b) der Rohrklemmschiene (3) etwa 6 mm lang ausgebildet sind und die Schichtdicke eines Werkstoffes (W2) von Unterkante Rohr (2) bis zur Oberfläche des Bauelements etwa 6 bis 8 mm beträgt, während die Rohrklemmschiene (3) auf ihrer Oberseite mit einer Schicht von etwa 40 bis 60 mm überdeckt ist.

5. Vorgefertigtes Bauelement nach Anspruch 1 und einem der Ansprüche 2 bis 3, **dadurch gekennzeichnet, daß** die Distanzfüße (3b) der Rohrklemmschiene (3) etwa 2 mm über das Rohr (2) hinausragen und die Unterseite der Rohrklemmschiene (3) mit einem gut wärmeleitenden Werkstoff (W2) ausgefüllt oder abgedeckt ist.

6. Vorgefertigtes Bauelement nach Anspruch 1 und einem der Ansprüche 2 bis 5, **dadurch gekennzeichnet, daß** auf der Oberseite der Rohrklemmschiene (3) eine Schicht eines Werkstoffes (W1) und auf der Unterseite derselben eine Schicht eines Werkstoffes (W2) oder Luft mit einer raumseitigen Abdeckung vorgesehen ist, wobei beide Werkstoffe (W1,W2) unterschiedliche Wärmeleitfähigkeiten aufweisen.

7. Vorgefertigtes Bauelement, nach Anspruch 1 und einem der Ansprüche 2 bis 6, **dadurch gekennzeichnet, daß** auf der Oberseite der Rohrklemmschiene (3) zwischen dieser und der Werkstoffschicht (W) eine Wärmedämmung vorgesehen ist.

## Claims

1. Prefabricated construction element, such as a ceiling element, wall element (1), or the like, of at least one hardenable material (W), such as concrete, with pipe register elements (2a) integrated therein and allowing for the flow of heating or cooling media for the climatic control of room areas, **characterised by** several pipe clamping rails (3) surrounded by the material (W) for accommodating the thin-walled pipes (2) with small diameter of the pipe register elements (2a), whereby the pipe clamping rails (3) have on their under side, pointing towards the area of climatic control, pipe holders (3a) for the pipes (2) and at least two pipe holders (3a) between, each with a spacer foot element (3b), and feature on their upper side short mountings (3c) for retaining positioning elements (4), and the coating thickness of the material (W) towards the area of climatic control corresponds approximately to the length of the spacer foot element (3b), while the thickness of the coating of the material (W) on the upper side of the pipe clamping rail (3) is provided so as to be higher.

2. Prefabricated construction element according to Claim 1, **characterised in that** the spacer foot (3b) of the pipe clamping rail (3) runs in conical fashion in the direction of its free end.

3. Prefabricated construction element according to Claim 1 and 2, **characterised in that** the pipes (2) feature a maximum diameter of 10 mm and a maximum wall thickness of 2.0 mm, and 1.2 mm for preference.

4. Prefabricated construction element according to Claim 1 to 3, **characterised in that** the spacer foot elements (3b) of the pipe clamping rails (3) are designed to be about 6 mm long and the layer thickness of a material (W2) from the under side of the pipe (2) to the surface of the construction element amounts to about 6 to 8 mm, while the pipe clamping rails (3) are covered on their upper side by a layer of some 40 to 60 mm.

5. Prefabricated construction element according to Claim 1 and one of Claims 2 to 3, **characterised in that** the spacer foot elements (3b) of the pipe clamping rails (3) projects about 2 mm above the pipe (2) and the underside of the pipe clamping rails (3) is filled or covered with a material (W2) which is a good thermal conductor.

6. Prefabricated construction element according to Claim 1 and one of Claims 2 to 5, **characterised in that** on the upper side of the pipe clamping rails (3) a layer of a material (W1) is provided, and on the under side a layer of a material (W2) or air with a covering provided on the side facing the room area, whereby the two materials (W1, W2) feature different thermal conductivity values.

7. Prefabricated construction element according to Claim 1 and one of Claims 2 to 6, **characterised in that** thermal insulation is provided for on the upper side of the pipe clamping rail (3) between the rail and the material layer (W).

## Revendications

1. Elément de construction préfabriqué, tel qu'un élément de plafond, de mur ou autre (1), composé d'au moins un matériau (W) durcissable, par exemple du béton, comportant des registres tubulaires (2a) intégrés, dans lesquels le produit de chauffage ou réfrigérant peut circuler et utilisés pour la climatisation de pièces, **se caractérisant par le fait que** plusieurs rails de fixation des tuyaux (3) entourés du matériau (W) servent à loger de minces tuyaux (2) de faible diamètre des registres tubulaires (2a), ces rails (3) comportant sur leur face inférieure tournée vers la pièce à climatiser des porte-tuyau (3a) pour les tuyaux (2) ainsi qu'un pied d'écartement (3b) entre au moins deux porte-tuyau (3a) et présentant sur leur face supérieure de petits supports (3c) servant à maintenir les éléments de positionnement (4). L'épaisseur du matériau (W) vers la pièce à climatiser correspond environ à la longueur des pieds d'écartement (3b) tandis que l'épaisseur du matériau (W) sur la face supérieure du rail (3) doit être supérieure.

2. Elément de construction préfabriqué conformément à la revendication 1, **se caractérisant par le fait que** les pieds d'écartement (3b) du rail de fixation des tuyaux (3) sont coniques vers leur extrémité libre.

3. Elément de construction préfabriqué conformément aux revendications 1 et 2, **se caractérisant par le fait que** les tuyaux (2) présentent un diamètre de 10 mm max. pour une épaisseur de paroi max. de 2,0 mm et de préférence de 1,2 mm.

4. Elément de construction préfabriqué conformément aux revendications 1 à 3, **se caractérisant par le fait que** les pieds d'écartement (3b) du rail de fixation des tuyaux (3) mesurent environ 6 mm de long et que l'épaisseur de matériau (W2) de l'arête inférieure du tuyau (2) à la surface de l'élément de construction est comprise entre 6 et 8 mm tandis que le rail de fixation des tuyaux (3) est recouvert sur sa face supérieure d'une couche comprise entre 40 et 60 mm.

5. Elément de construction préfabriqué conformément à la revendication 1 et à une des revendications 2 à 3, **se caractérisant par le fait que** les pieds d'écartement (3b) du rail de fixation des tuyaux (3) dépassent de 2 mm environ au-dessus du tuyau (2) et que la face inférieure du rail de fixation des tuyaux (3) est remplie ou recouverte de matériau (W2) bien conducteur de chaleur.

6. Elément de construction préfabriqué conformément à la revendication 1 et à une des revendications 2 à 5, **se caractérisant par le fait qu'**une couche de matériau (W1) est prévue sur la face supérieure du rail de fixation des tuyaux (3) et qu'une couche de matériau (W2) ou de l'air avec protection côté pièce est prévu sur la face inférieure, les deux matériaux (W1, W2) présentant des conductibilités thermiques différentes.

7. Elément de construction préfabriqué conformément à la revendication 1 et une des revendications 2 à 6, **se caractérisant par le fait qu'**une isolation thermique est prévue sur la face supérieure du rail de fixation des tuyaux (3) entre celui-ci et la couche de matériau (W).
